(19) Europäisches Patentamt
European Patent Office
Office européen des brevets

(11) **EP 2 586 594 B1**

(12) **EUROPEAN PATENT SPECIFICATION**

(45) Date of publication and mention
of the grant of the patent:
**09.08.2017 Bulletin 2017/32**

(51) Int Cl.:
**B29C 65/16** (2006.01)     B29L 11/00 (2006.01)
B29C 65/82 (2006.01)     B29K 29/00 (2006.01)
B65H 19/18 (2006.01)     G02B 5/30 (2006.01)

(21) Application number: **11797996.3**

(22) Date of filing: **09.06.2011**

(86) International application number:
**PCT/JP2011/063242**

(87) International publication number:
**WO 2011/162110 (29.12.2011 Gazette 2011/52)**

(54) **METHOD FOR BONDING POLYMER FILM AND METHOD FOR PRODUCING POLARIZING FILM**

VERFAHREN ZUM BINDEN EINES POLYMERFILMS UND VERFAHREN ZUR HERSTELLUNG EINER POLARISATIONSFOLIE

PROCÉDÉ DE LIAISON D'UNE PELLICULE POLYMÈRE ET PROCÉDÉ DE PRODUCTION D'UNE PELLICULE POLARISANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2011 JP 2011116052**
**23.06.2010 JP 2010142610**

(43) Date of publication of application:
**01.05.2013 Bulletin 2013/18**

(73) Proprietor: **Nitto Denko Corporation**
**Osaka 567-8680 (JP)**

(72) Inventors:
• **MATSUO, Naoyuki**
**Ibaraki-shi**
**Osaka 567-8680 (JP)**

• **SHIMODA, Mayu**
**Ibaraki-shi**
**Osaka 567-8680 (JP)**

(74) Representative: **Stolmár & Partner**
**Patentanwälte PartG mbB**
**Blumenstraße 17**
**80331 München (DE)**

(56) References cited:
**JP-A- 2004 160 665     JP-A- 2004 284 122**
**JP-A- 2004 284 122     JP-A- 2009 066 820**
**JP-A- 2009 066 820**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a method of bonding a polymer film by contacting a surface of the polymer film which is a polyvinyl alcohol resin film with a surface of a material to be bonded and laser welding the interface between the surface of the polymer film and the surface of the material to be bonded, and a method of producing a polarizing film by dipping a raw film formed of two or more joined polyvinyl alcohol resin films into a chemical solution to produce a polarizing film.

BACKGROUND ART

In the related art, polyvinyl alcohol resin (PVA) films are known as a polymer film having relatively high water absorbing properties. The polyvinyl alcohol resin film is used as a raw material for a polarizing film and the like.

A high quality polarizing film is used for image display apparatuses such as liquid crystal display apparatuses. In a method of producing such a polarizing film, a variety of treatments are performed by causing the polyvinyl alcohol resin film to absorb water and thereby swell.

For example, such a polarizing film is produced according to a process in which a polyvinyl alcohol resin film (raw film) is fed from a raw film roll produced by winding a band-like polyvinyl alcohol resin film as a raw film into a roll; the raw film is traveled in the longitudinal direction, and dipped into a swelling bath and a dyeing bath successively; then, the raw film is nipped by rollers at two places of a leading portion and a tail portion of the raw film in the traveling direction, and a tension is applied therebetween to stretch the raw film.

In the method of producing such a polarizing film, every time when the raw film roll is replaced, a new raw film is wound around the rollers or the like, and set in the apparatus. This is very complicated and time-consuming. For this reason, the leading end of the raw film fed from the next raw film roll is bonded to the tail end of the previous raw film, and the two joined raw films are sequentially and continuously processed into a polarizing film.

As such a bonding method, in the related art, methods such as adhesive bonding methods using an adhesive tape, an adhesive or the like, sewing bonding methods using a rivet, a thread or the like, or heat melting bonding methods using a heat sealer or the like, are used.

Such methods, however, have problems below.

· Problems in adhesive bonding using an adhesive tape, an adhesive or the like

In the step of dipping the raw film in a swelling bath, a dyeing bath or the like, the component of the adhesive and the like are eluted into the chemical solution to contaminate the chemical solution. The contamination may cause adhesion of foreign substances to products. In addition, the adhesive dissolves in the chemical solution or swells due to a component in the chemical solution to reduce bonding strength. This may break the joint portion in the stretching step before the stretch ratio reaches a desired stretch ratio.

· Problems in sewing bonding using a rivet, a thread or the like

In this method, holes for a rivet or a thread are formed in the raw film. For this reason, when a tension is applied to the joint portion, the joint portion may be broken from the holes.

When the number of holes is reduced and the holes are formed at a larger interval in order to prevent such breakage, application of a tension may easily cause wrinkles, causing troubles during conveying the film.

· Problems in heat melting bonding using a heat sealer or the like

As a bonding method that can solve the problems in the adhesive bonding and the sewing bonding, a bonding method using a heat sealer is known as shown in Patent Documents 1 and 2 below.

In this method, the members to be bonded are directly bonded. For this reason, possibilities to contaminate the chemical solution are smaller and cleanser bonding is enabled than in the case of the adhesive bonding, and a more uniform bonded portion can be formed than in the case of the sewing bonding to prevent formation of wrinkles and the like.

As above, a higher quality bonded portion can be formed in bonding using a heat sealer than in the case of the adhesive bonding and sewing bonding. In bonding using a heat sealer, however, air bubbles are likely to get mixed in the welded portion because a wider area of the bonded portion is heated. This method has room for improvement.

CITATION LIST

PATENT DOCUMENT

Patent Document 1: Japanese Patent Laid-Open No. 2007-171897
Patent Document 2: Japanese Patent Laid-Open No. 2010-8509

JP 2009 066820 A is directed to a laser welding method of plastic members between which water is interposed. Said laser welding method for the plastic members interposed with water comprises a preparation step of preparing one set of the members intended to be joined, a contact surfaces step of bringing the surfaces of the members into contact with each other, and filling the water into a clearance space produced when the members are pressed to each other to make the contact surface, and a fusing step of irradiating at least one of the members with loser beams to cause heat generation to fuse the members to each other.

In JP 2004 284122 A, a method for welding resin molded objects using laser is provided. According to JP 2004 284122 A in a first, molded object and a second molded object either one of carbon dioxide, nitrogen and water is added to at least the surface layer of the second molded object as a foaming agent. Then the foaming agent is foamed to be expanded in its volume by the heat occurring from the surface layer at the time of laser welding to fill the gap present between the surfaces to be welded of both resin molded objects with the surface layers expended in its volume of the second resin molded objet to integrally weld both resin molded objects.

## SUMMARY OF INVENTION

### TECHNICAL PROBLEM

To solve such problems, instead of the heat sealer, use of bonding using laser welding is also thought, which has been used to bond resin members.

The laser welding in the related art uses laser light having a wavelength in an infrared or near-infrared region. Two films to be bonded are layered with a light absorbing agent containing a phthalocyanine pigment being applied to the interface between the films. The layered portion is irradiated with the laser light.

In such laser welding, an extremely slight region of the interface portion is selectively heated. For this reason, mixing of air bubbles in the welded portion can be prevented. In addition, the laser welding enables welding with higher precision.

In production of such a polarizing film, however, the light absorbing agent remaining around the welded portion may contaminate the chemical solution.

Namely, in the bonding method in the related art, a problem is that it is difficult to form a high quality bonded portion suitable for dipping the film into the chemical solution or the like.

The present invention aims at solving such problems in the laser welding, and improving efficiency in the method of producing a polarizing film.

Suppression in use of the light absorbing agent in laser welding is widely demanded not only in the case where polyvinyl alcohol resin films used as a raw material for the polarizing film are bonded, but also in the case where a polymer film such as a polyvinyl alcohol resin film is laser welded.

## SOLUTION TO PROBLEM

In order to solve the problems, there is provided a method of bonding a polymer film, including contacting a surface of a polymer film which is a polyvinyl alcohol resin film with a surface of a material to be bonded and laser welding an interface between the surface of the polymer film and the surface of the material to be bonded, wherein water is absorbed at least in the interface side of the polymer film, the interface side is irradiated with laser light, and the laser light is absorbed by the absorbed water to perform the laser welding.

Moreover, there is provided a method of producing a polarizing film, including dipping a raw film into a chemical solution to produce a polarizing film, the raw film being produced by bonding two or more polyvinyl alcohol resin films, wherein the bonding of the raw film is performed according to the method of bonding a polymer film.

## ADVANTAGEOUS EFFECTS OF INVENTION

In the present invention, the laser light is absorbed by water. This can suppress use of the pigment used in the related art for absorbing the laser light, and enables the laser welding in the same manner as in the related art. While use of the light absorbing agent is suppressed, high quality bonding of a water absorbable polymer film which is a polyvinyl alcohol resin film can be performed.

Moreover, two or more band-like polyvinyl alcohol resin films are bonded using such a bonding method, and the bonded film is used as a raw film. Thereby, while contamination of the chemical solution is suppressed, these polyvinyl alcohol resin films can be dipped into the chemical solution to produce a polarizing film efficiently.

## BRIEF DESCRIPTION OF DRAWINGS

FIG. 1 is a schematic perspective view showing an apparatus used in a method of producing a polarizing film according to one embodiment.
FIG. 2 is a schematic perspective view showing a manner in which raw films are bonded and fed to a polarizing film producing apparatus.
FIG. 3 is a schematic front view showing a mechanism of essential parts of a bonding apparatus for bonding raw films.

## DESCRIPTION OF EMBODIMENTS

Hereinafter, an embodiment of the method of bonding a polymer film according to the present invention will be described using examples applied to the method of producing a polarizing film.

More specifically, a case where by bonding band-like polyvinyl alcohol resin films, these band-like polyvinyl alcohol resin films are continuously fed to a stretching apparatus to produce a polarizing film will be exemplified and described.

First, a preferred stretching apparatus for implementing the method of producing a polarizing film according to the present embodiment will be described with reference to the drawings.

The stretching apparatus according to the present embodiment includes a raw film feeder 3 that feeds a raw film 1 from a raw film roll formed by winding a band-like polyvinyl alcohol resin film (hereinafter, referred to as a "raw film" or simply referred to as a "film") into a roll, a plurality of dipping baths 4 for dipping the fed raw film 1 into predetermined chemical solutions, a plurality of rollers 9 that restricts the traveling path of the raw film 1 so as to pass the raw film 1 through the inside of the dipping bath 4, a stretching unit that stretches the raw film 1 in the course of the traveling path, and a polarizing film winder 10 that winds, as a polarizing film, the film dipped in the plurality of dipping baths 4 and stretched into a roll.

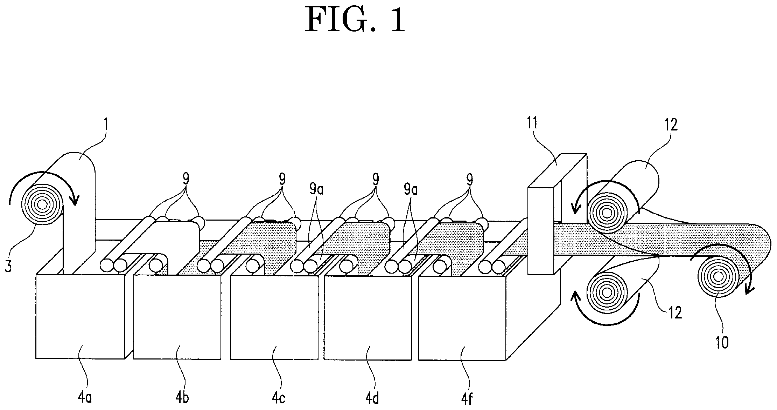

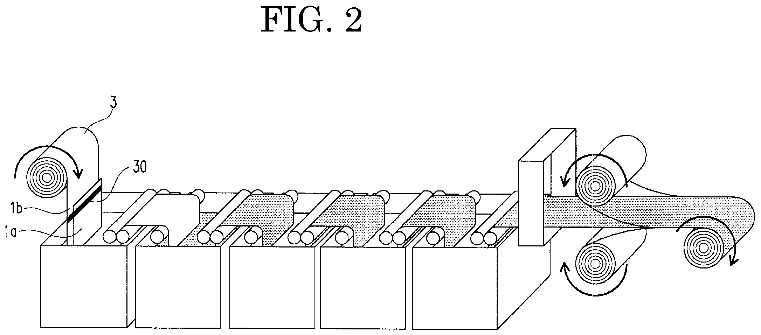

FIG. 1 and FIG. 2 are schematic perspective views showing one embodiment of the preferred stretching apparatus.

As shown in FIG. 1, as the plurality of dipping baths 4, the stretching apparatus includes five dipping baths 4, namely, from the side upstream of the traveling direction of the film, a swelling bath 4a containing a swelling solution and swelling the polyvinyl alcohol resin film, a dyeing bath 4b containing a dye solution and dyeing the swelled film, a crosslinking bath 4c containing a crosslinking agent solution and crosslinking chains of the resin that forms the film, a stretching bath 4d for stretching the film inside of the bath, and a washing bath 4f containing a washing liquid and washing the film passed through the stretching bath 4d.

The stretching apparatus according to the present embodiment also includes a dryer 11 for drying the washing liquid adhering to the film, specifically a drying oven provided downstream of the washing bath 4f and upstream of the winder 10 in the traveling path of the film.

Further, the stretching apparatus according to the present embodiment includes a roll of a laminate film 12 such as a surface protective film (e.g., a triacetylcellulose film or a cyclo olefin polymer film) arranged on the front and rear surface sides of the film dried by the dryer 11. The stretching apparatus according to the present embodiment includes a laminating apparatus for laminating the laminate film 12 on the front and rear surfaces of the film after drying.

As the stretching unit, the so-called roll stretching unit 9a is used. Namely, several pairs of nip rollers 9a are arranged in the course of the traveling path, and configured to hold the film therebetween and feed the film to the side downstream of the traveling direction. The several pairs of nip rollers 9a are also configured such that the pair of nip rollers on the side downstream of the traveling direction has a circumferential speed higher than that of the pair of nip rollers on the side upstream of the traveling direction.

Further, the stretching apparatus includes a bonding apparatus (not shown in FIG. 2) for bonding a tail end 1a of the raw film 1 to a leading end 1b of a new raw film 1 to be fed into the traveling path following the raw film 1 by laser welding before the tail end 1a of the raw film 1 is fed into the restricted traveling path, specifically, fed into the dipping bath 4, as shown in FIG. 2.

In FIG. 2, the portion bonded by irradiation with a laser is shown as a black solid 30.

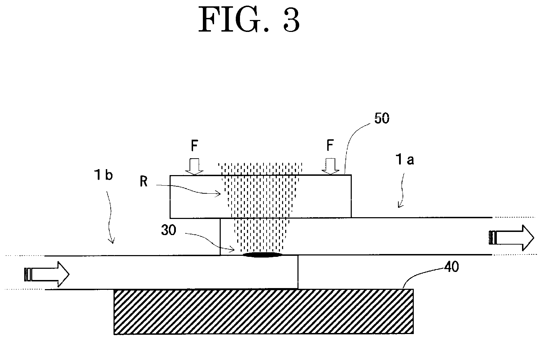

Next, a preferred bonding apparatus will be described with reference to FIG. 3.

FIG. 3 is a schematic configuration view showing a bonding apparatus that bonds the old and new raw films to each other by laser welding.

FIG. 3 is a front view of the bonding apparatus seen in the TD direction (transverse direction) from a lateral side of the raw films to be bonded.

As shown in FIG. 3, the bonding apparatus includes a stage 40 having a flat upper surface, a pressurizing member 50 arranged above the stage 40 movably in the vertical direction, and a laser light source (not shown) arranged above the pressurizing member 50. The bonding apparatus is configured such that the preceding tail end 1a of the raw film 1 is layered on the leading end 1b of the new raw film 1 to be bonded thereto on the stage 40, the layered portion is irradiated with laser light R from the laser light source while a pressure is applied to the layered portion by the pressurizing member 50; thereby, the interface portion between the tail end 1a and the leading end 1b is heated and molten to be welded. The pressurizing member 50 is formed with a transparent member highly transmissive to the laser light R.

The bonding apparatus preferably includes a water absorbing portion for causing one (or both) of the surfaces of the tail end 1a and the leading end 1b contacting at the interface portion to absorb water in advance, so as to enhance light absorbing properties of the interface portion between the tail end 1a and the leading end 1b to the laser light R and hence attain the welding efficiently.

Particularly, a water absorbing portion is preferably provided for causing the films to absorb water such that the water absorbing rate on the side of the other film (leading end 1b) to be bonded to one film (in FIG. 3, the preceding raw film (tail end 1a)) on the side transmitting the laser light toward the interface is higher than that of the latter film.

The water absorbing portion can be formed with an ordinary apparatus for applying water. As such a water applying apparatus, a water applying apparatus such as a dispenser, an inkjet printer, a screen printer, a 2-fluid, 1-fluid, or ultrasonic spray, a stamper, and a coater can be used.

Preferably, the apparatus is arranged so as to apply water to the upper surface side of the leading end 1b, which serves as a bonding interface to the tail end 1a.

The kind of the laser light source used in the bonding apparatus is also not particularly limited. The laser light to be used has a function to be absorbed by the absorbed water in the middle of the layered portion (interface) of the old and new raw films to generate heat, and preferably has a wavelength highly absorbable by water.

Specifically, as the laser, the laser light having a function to be absorbed by water contained in the raw film to generate heat, and having a wavelength in the range of 1.9 to 2.2 $\mu$m at which the laser light is highly absorbable by water is preferably used.

For example, as the laser having such a preferable wavelength, thulium-doped fiber lasers, holmium-doped YAG lasers, and InGaAs semiconductor lasers can be used.

In order to avoid decomposition of the raw film and promote melting of the raw film, CW lasers with a continuous wave are preferable compared to pulse lasers that give high energy instantaneously.

The output (power), beam size, and shape of the laser light, the number of irradiation with the laser light, and further the scan rate of the laser light, and the like may be properly optimized depending on a difference in optical properties such as the water absorbing state and light absorptivity of a target water absorbable polymer film and thermal properties such as the melting point and glass transition temperature (Tg) of the polymer that forms the raw film, or the like. In order to obtain strong bonding by efficiently fluidizing the polyvinyl alcohol resin in the portion irradiated with the laser, the power density of the laser light used for irradiation is preferably in the range of 200 W/cm$^2$ to 10,000 W/cm$^2$, more preferably in the range of 300 W/cm$^2$ to 5,000 W/cm$^2$, and particularly preferably in the range of 1,000 W/cm$^2$ to 3,000 W/cm$^2$.

The integrated amount of irradiation of the laser light is preferably within the range of 5 J/cm$^2$ to 400 J/cm$^2$, more preferably within the range of 10 J/cm$^2$ to 300 J/cm$^2$, and particularly preferably within the range of 30 J/cm$^2$ to 150 J/cm$^2$.

Accordingly, a laser light source satisfying these conditions is preferably applied to the bonding apparatus.

The laser light source used in the bonding apparatus preferably can emit laser light at a spot diameter (irradiation width) of a predetermined size to the interface between the old and new raw films.

The irradiation spot diameter (irradiation width) is preferably not less than 1/10 of and not more than 3 times the width of the layered portion of the old and new raw films at a power that satisfies the irradiation laser power density.

When the irradiation spot diameter is less than 1/10 of the width of the layered portion, a non-bonded portion in the layered portion is large, and film may flutter when the film is conveyed after bonding, inhibiting good transportability of the film.

When the layered portion is irradiated with the laser having an irradiation spot diameter more than 3 times the width of the layered portion, no influence on bonding and stretching properties is found, but such irradiation is not preferable from the viewpoint of energy usage efficiency.

Preferably, the irradiation spot diameter is equal to or more than 1/5 of the width of the layered portion and not more than 2 times the width of the layered portion.

The width of the layered portion of the old and new raw films is preferably not less than 0.1 mm and less than 50 mm, and more preferably not less than 0.5 mm and less than 30 mm.

This is because it is difficult to layer and dispose wide raw films repeatedly and precisely when the width of the layered portion is less than 0.1 mm, and a non-bonded region may be increased to cause fluttering of the film during conveying the film after bonding when the width is not less than 50 mm.

In the layered portion of the old and new raw films, a sufficient region in the leading end and tail end of the respective raw films is bonded to prevent fluttering of the leading end and tail end of the raw films during conveying. This is preferable from the viewpoint of attaining good conveying properties of the film. Considering such a viewpoint, the non-bonded portion in the layered portion of the old and new raw films has a width of preferably not more than 5 mm, more preferably not more than 2 mm, and still more preferably 0 mm (the entire surface of the layered portion is bonded).

In the present embodiment, the bonding apparatus is preferably configured such that the laser welding can be performed along the layered portion of the old and new raw films to form a linear welded portion. For example, preferably, the bonding apparatus includes a mechanism to scan along the layered portion with a spot beam converged into a desired beam size by a converging lens, a mechanism to shape a linear laser beam using an optical member such as a cylindrical lens and a diffractive optical element and irradiate the layered portion of the raw films with the laser beam, and a mechanism to have a plurality of laser light sources arranged along the layered portion, and melt and thermal bond the layered portion in batch without scan by simultaneous irradiation with the laser light sources.

In such irradiation with the laser light, the pressurizing member 50 applies pressure to the layered old and new raw films (tail end 1a of the old raw film and the leading end 1b of the new raw film) on the stage. A glass member having high transparency to the laser light to be used can be used for the pressurizing member 50.

A pressure applied during irradiation with the laser light is preferably in the range of 0.5 to 100 kgf/cm$^2$, and more preferably in the range of 10 to 70 kgf/cm$^2$.

Accordingly, as the pressurizing member 50 preferably used in the bonding apparatus, the shape of the glass member is not particularly limited as long as the member can apply a pressure in the range above. For example, a flat plate, cylindrical, or spherical glass member can be used.

The thickness of the glass member is not particularly limited. When the thickness is excessively thin, a pressure cannot be applied well due to distortion. When the thickness is excessively thick, usage efficiency of the laser light is reduced. For this reason, the thickness in the direction of the laser light transmitting is preferably not less than 3 mm and less than 30 mm, and more preferably not less than 5 mm and less than 20 mm.

Examples of a material for the pressurizing member 50 include quartz glass, non-alkali glass, TEMPAX, PYREX (registered trademark), Vycor, D263, OA10, and AF45.

In order to enhance usage efficiency of the laser light R, the glass member used for the pressurizing member preferably has high transparency to the wavelength of the laser light to be used, and has a light transmittance of preferably not less than 50%, and more preferably not less than 70%.

In the case where the pressurizing member 50 is formed with such a glass member, a cushioning layer having higher cushioning properties than those of the glass member can be formed in a portion contacting the polyvinyl alcohol resin film such that a pressure can be applied more uniformly to a larger area and a good bonding can be made over the whole area.

Namely, a pressurizing member 50 including a highly light-transmissive rubber sheet, a transparent resin sheet having cushioning properties or the like can be used. For example, a pressurizing member 50 can be used, in which the rear surface of the pressurizing member 50 is formed with the glass member, and the front surface thereof contacting the polyvinyl alcohol resin film is formed with a transparent rubber sheet.

The cushioning layer can be formed using, for example, rubber materials such as silicon rubbers and urethane rubbers and resin materials such as polyethylene.

The thickness of the cushioning layer is preferably not less than 50 $\mu$m and less than 5 mm, and more preferably not less than 1 mm and less than 3 mm.

At a thickness less than 50 $\mu$m, cushioning properties are poor. At a thickness not less than 5 mm, the cushioning layer may absorb or scatter the laser light to reduce energy of the laser light that reaches the contacting interface portion of the tail end 1a and the leading end 1b.

The cushioning layer preferably has a light transmittance of not less than 30%, and more preferably not less than 50% to the wavelength of the laser light to be used.

The stage 40 cooperates with the pressurizing member to apply pressure to the layered portion of the raw films. The material for the stage 40 is not particularly limited. For example, those having an upper surface formed of metal, glass, resin, rubber, or ceramics can be used.

In the case where wide raw films are spliced (bonded), a stage having an upper surface formed of a material having relatively low hardness and having cushioning properties such as rubber and resin is preferably used as the stage 40 in order to apply pressure uniformly within a plane to achieve good bonding over the entire area.

Although the detail description will be omitted, the bonding apparatus can use various mechanisms used in ordinary laser welding apparatuses and peripheral apparatuses thereof.

Next, a method of producing a polarizing film using the stretching apparatus including such a bonding apparatus will be described.

In the method of producing a polarizing film according to the present embodiment, the following steps are performed: a swelling step of dipping the raw film into the swelling bath 4a to swell the raw film, a dyeing step of dipping the swelled film into the dyeing bath 4b to dye the raw film, a crosslinking step of dipping the dyed film into the crosslinking bath 4c to crosslink molecular chains of the resin that forms the film, a stretching step of stretching the film after the crosslinking step inside of the stretching bath 4d, a washing step of washing the film after the stretching step, a drying step of drying the washed film with the dryer 11, and a laminating step of laminating a surface protective film on the film after drying are performed.

In the method of producing a polarizing film according to the present embodiment, one raw film roll is set in the raw film feeder 3. The raw film is continuously fed from the raw film feeder 3, and subjected to the steps in the course of the traveling path and finally subjected to the laminating step. Then, the obtained product (polarizing film) is subjected to a winding step of winding the product into a roll in the polarizing film winder 10. The bonding step of bonding the films is separately performed as follows: before the raw film roll is run out, the raw film is fed from a new raw film roll; and the leading end 1b of the new raw film is bonded to the tail end 1a of the preceding raw film roll. Thereby, successively, the raw film is fed from the new raw film roll to the stretching apparatus to continuously produce the polarizing film.

As the raw film used for the method of producing a polarizing film according to the present embodiment, a film formed of a polyvinyl alcohol polymer resin material used as the raw material for the polarizing film is used. Specifically, polyvinyl alcohol films, partially saponified polyvinyl alcohol films, dehydrated polyvinyl alcohol films or the like can be used, for example.

Usually, these raw films are used in a state of a raw film roll in which the film is wound into a roll as described above.

The polymerization degree of the polymer as a material for forming the polyvinyl alcohol resin film is usually 500 to 10,000, and preferably in the range of 1,000 to 6,000, and more preferably in the range of 1,400 to 4,000.

In the case of the partially saponified polyvinyl alcohol film, the saponification degree is preferably not less than 75 mol %, and more preferably not less than 98 mol %, and more preferably in the range of 98.3 to 99.8 mol % from the viewpoint of solubility in water, for example.

As the polyvinyl alcohol resin film, those formed by any method of a casting method of casting a raw solution having materials dissolved in water or an organic solvent to form a film, a casting method, an extrusion method, and the like can be properly used.

The phase difference value of the raw film is preferably 5 nm to 100 nm.

In order to obtain an in-plane uniform polarizing film, fluctuation in the phase difference of the polyvinyl alcohol resin film in-plane is preferably as small as possible, and fluctuation in the in-plane phase difference of the polyvinyl alcohol resin film as the raw film is preferably not more than 10 nm and more preferably not more than 5 nm at a measurement wavelength of 1000 nm.

When the laser bonding is performed, the laser welding is preferably performed under the condition in which the laser light exhibits a light absorptivity of not less than 20%. The light absorptivity can be usually adjusted according to the water absorbing state of the polyvinyl alcohol resin film, or the like.

Accordingly, as the state of moisture absorption during laser bonding, the moisture absorbing rate is preferably 3% by mass to 40% by mass, and more preferably 5% by mass to 25% by mass.

When the raw film before bonding has a water absorbing rate of not less than 40% by mass, the film may be likely to be extended by swelling during the laser welding, causing significant positional deviation of the film.

At a water absorbing rate of less than 3% by mass, sufficient light absorbing properties may not be obtained, reducing bonding efficiency.

The light absorptivity can be determined as follows: using an ultraviolet-visible-near-infrared spectrophotometer, type "V-670" made by JASCO Corporation, transmittance: T (%) and reflectance: R (%) of a target wavelength band are measured in an integrating sphere mode, and calculation is performed by the following expression:

$$\text{light absorptivity: } A\,(\%) = 100 - T - R$$

The moisture absorbing rate is determined by comparing the masses of the polyvinyl alcohol resin film before and after drying. For example, the moisture absorbing rate can be determined by heating the polyvinyl alcohol resin film at 83°C for 1 hour, and dividing the heating loss by the mass of the polyvinyl alcohol resin film before heating.

Next, each of the steps for stretching the raw film by the stretching apparatus to process the raw film into a polarizing film will be described.

(Swelling step)

In the step, for example, the raw film fed from the raw film feeder 3 is guided by the rollers 9 to the swelling bath 4a filled with water while the traveling rate is kept constant, and dipped into water.

Thereby, the raw film is washed with water, and dirt on the surface of the raw film and a blocking preventing agent can be washed off. Moreover, by swelling the raw film with water, an effect of preventing unevenness such as dyeing unevenness can be expected.

Besides water, glycerin or potassium iodide may be properly added to the swelling solution in the swelling bath 4a. In the case where these are added, the concentration of glycerin is preferably not more than 5% by mass, and the concentration of potassium iodide is preferably not more than 10% by mass.

The temperature of the swelling solution is preferably in the range of 20 to 45°C, and more preferably 25 to 40°C.

The dipping time to dip the raw film into the swelling solution is preferably for 2 to 180 seconds, and more preferably for 10 to 150 seconds, and particularly preferably for 30 to 120 seconds.

Moreover, the polyvinyl alcohol resin film may be stretched in the longitudinal direction inside the swelling bath. At this time, the stretch ratio including extension by swelling is preferably approximately 1.1 to 3.5 times.

(Dyeing step)

The film subjected to the swelling step is dipped into the dye solution contained in the dyeing bath 4b by the rollers 9 in the same way as that in the swelling step to perform the dyeing step.

For example, the polyvinyl alcohol resin film subjected to the swelling step is dipped into a dye solution containing a dichroic substance such as iodine to adsorb the dichroic substance to the film. Using such a process, the dyeing step can be performed.

As the dichroic substance, known substances can be used. Examples of those include iodine and organic dyes.

As the organic dyes, Red BR, Red LR, Red R, Pink LB, Rubine BL, Bordeaux GS, Sky Blue LG, Lemon Yellow, Blue BR, Blue 2R, Navy RY, Green LG, Violet LB, Violet B, Black H, Black B, Black GSP, Yellow 3G, Yellow R, Orange LR, Orange 3R, Scarlet GL, Scarlet KGL, Congo Red, Brilliant Violet BK, Supra Blue G, Supra Blue GL, Supra Orange GL, Direct Sky Blue, Direct Fast Orange S, Fast Black, and the like can be used, for example.

These dichroic substances may be used singly, or may be used in combinations of two or more.

In the case where the organic dye is used, for example, the dichroic substances are preferably used in combinations of two or more from the viewpoint of neutralization of the visible light region.

Specific examples thereof include a combination of Congo Red and Supra Blue G, a combination of Supra Orange GL and Direct Sky Blue, or a combination of Direct Sky Blue and Fast Black.

As the dye solution in the dyeing bath, a solution prepared by dissolving the dichroic substance in a solvent can be used.

As the solvent, water can be usually used. An organic solvent having compatibility with water may be further added to water and used.

The concentration of the dichroic substance in the dye solution is preferably in the range of 0.010 to 10% by mass, preferably in the range of 0.020 to 7% by mass, and particularly preferably 0.025 to 5% by mass.

In the case where iodine is used as the dichroic substance, dyeing efficiency can be further improved. Accordingly, iodides are preferably further added.

Examples of iodides include potassium iodide, lithium iodide, sodium iodide, zinc iodide, aluminum iodide, lead iodide, copper iodide, barium iodide, calcium iodide, tin iodide, and titanium iodide.

The proportion of these iodides to be added is preferably 0.010 to 10% by mass, and more preferably 0.10 to 5% by mass in the dyeing bath.

Among these, potassium iodide is preferably added. The proportion (mass ratio) of iodine to potassium iodide is preferably in the range of 1:5 to 1:100, more preferably in the range of 1:6 to 1:80, and particularly preferably in the range of 1:7 to 1:70.

The dipping time to dip the film into the dyeing bath is not particularly limited. The dipping time is preferably in the range of 0.5 to 20 minutes, and more preferably in the range of 1 to 10 minutes. The temperature of the dyeing bath is preferably in the range of 5 to 42°C, and more preferably in the range of 10 to 35°C.

Moreover, the film may be stretched in the longitudinal direction inside the dyeing bath. The total accumulated stretch ratio at this time is preferably approximately 1.1 to 4.0 times.

As the dyeing step, other than the method of dipping the film into the dyeing bath, a method of applying or spraying an aqueous solution containing the dichroic substance to the polymer film may be used, for example.

In the present invention, without performing the dyeing step, a film formed of a polymer raw material premixed with the dichroic substance may be used as the raw film to be used.

(Crosslinking step)

Next, the film is introduced into the crosslinking bath 4c containing the crosslinking agent solution, and dipped into the crosslinking agent solution to perform the crosslinking step.

As the crosslinking agent, known substances can be used.

For example, boron compounds such as boric acid and borax, glyoxal, glutaraldehyde, and the like can be used.

These may be used singly, or may be used in combinations of two or more.

In the case where these are used in combinations of two or more, for example, a combination of boric acid and borax is preferable. The proportion (molar ratio) of these to be added is preferably in the range of 4:6 to 9:1, more preferably in the range of 5.5:4.5 to 7:3, and most preferably 6:4.

As the crosslinking agent solution in the crosslinking bath, those prepared by dissolving the crosslinking agent in a solvent can be used.

As the solvent, water can be used, for example. Further, an organic solvent having compatibility with water may be used with water. The concentration of the crosslinking agent in the crosslinking agent solution is not particularly limited. The concentration is preferably in the range of 1 to 10% by mass, and more preferably 2 to 6% by mass.

In order to give in-plane uniform properties to the polarizing film, an iodide may be added to the crosslinking agent solution in the crosslinking bath.

Examples of the iodide include potassium iodide, lithium iodide, sodium iodide, zinc iodide, aluminum iodide, lead iodide, copper iodide, barium iodide, calcium iodide, tin iodide, and titanium iodide. In the case where these are added, the content of the iodide is preferably 0.05 to 15% by mass, and more preferably 0.5 to 8% by mass.

As a combination of the crosslinking agent and an iodide, a combination of boric acid and potassium iodide is preferable. The proportion (mass ratio) of boric acid to potassium iodide is preferably in the range of 1:0.1 to 1:3.5, and more preferably in the range of 1:0.5 to 1:2.5.

The temperature of the crosslinking agent solution in the crosslinking bath is usually preferably in the range of 20 to 70°C. The dipping time of the polyvinyl alcohol resin film can be usually any time in the range of 1 second to 15 minutes, and preferably 5 seconds to 10 minutes.

In the crosslinking step, the film may be stretched in the longitudinal direction in the crosslinking bath. At this time, the total accumulated stretch ratio is preferably approximately 1.1 to 5.0 times.

As the crosslinking step, similarly to the dyeing step, a method of applying or spraying a solution containing the crosslinking agent may be used instead of the method of dipping the film into the crosslinking agent solution to perform the crosslinking step.

(Stretching step)

The stretching step is a step of stretching the dyed and crosslinked polyvinyl alcohol resin film in the longitudinal direction so as to have the total accumulated stretch ratio of 2 to 8 times, for example. In the wet stretching method, the film is stretched by applying tension to the film in the longitudinal direction while the film is dipped in the solution contained in the stretching bath.

The solution contained in the stretching bath is not particularly limited. For example, a solution to which a variety of metal salts, an iodine, boron, or zinc compound is added can be used.

As the solvent for the solution, water, ethanol, or a variety of organic solvents can be properly used.

Among these, a solution to which approximately 2 to 18% by mass of boric acid and/or approximately 2 to 18% by mass of potassium iodide is added is preferably used.

In the case where boric acid and potassium iodide are used at the same time, the proportion (mass ratio) of these to be used is approximately 1:0.1 to 1:4, and more preferably approximately 1:0.5 to 1:3.

The temperature of the solution in the stretching bath is, for example, preferably in the range of 40 to 67°C, and more preferably 50 to 62°C.

(Washing step)

The washing step is a step of passing the film through a washing bath containing a washing liquid such as water to wash unnecessary residues adhering to the film in the previous step such as boric acid, for example.

An iodide is preferably added to water. For example, sodium iodide or potassium iodide is preferably added.

In the case where potassium iodide is added to water in the washing bath, the concentration is usually 0.1 to 10% by mass, and preferably 3 to 8% by mass.

Further, the temperature of the washing liquid is preferably 10 to 60°C, and more preferably 15 to 40°C.

The number of washing, namely, the number of repetition to dip the film into the washing liquid and pull out the film from the washing liquid is not particularly limited. The washing may be performed several times. Different additives at different concentrations may be added in water in a plurality of washing baths, and the film may be subjected to the washing step by passing the film through these washing baths.

When the film is pulled out from the dipping bath in each step, in order to prevent running of the solution, excessive water may be removed using a known solution draining roll such as a pinch roll, or a method of scraping off the solution with an air knife, or the like.

(Drying step)

The film washed in the washing step is introduced into the dryer 11, and properly dried by an optimal method such as natural drying, air drying, and heat drying to perform the drying step.

Among these, in the case where the drying step by heat drying is performed, the heat drying conditions are preferably the heating temperature of approximately 20 to 80°C and the drying time of approximately 1 to 10 minutes.

Further, the drying temperature is preferably kept as low as possible irrespective of the method in order to prevent deterioration of the film.

The drying temperature is more preferably not more than 60°C, and particularly preferably not more than 45°C.

(Laminating step) and (Winding step)

In the present embodiment, by performing the winding step of winding the film subjected to the steps above by the winding roller, a polarizing film wound into a roll can be obtained.

In the present embodiment, the winding step may be performed after the laminating step of properly laminating a surface protective film or the like on one or both of the surfaces of the polarizing film dried in the drying step is performed.

The final total stretch ratio of the thus-produced polarizing film is preferably any stretch ratio in the range of 5.5 to 8.0 times, and more preferably any stretch ratio in the range of 6.0 to 7.0 times to the raw film.

The above stretch ratio is preferable because it is difficult to obtain a polarizing film having high polarizing properties when the final total stretch ratio is less than 5.5 times, and the film may be broken when the final total stretch ratio is more than 8.0 times.

(Bonding step)

By performing the steps on the entire length of the raw film roll, the polarizing film can be continuously produced with high efficiency. In the present embodiment, before all the raw film roll is fed to the stretching apparatus, the polyvinyl alcohol resin film (raw film) is further fed from the next raw film roll, and the bonding step of bonding the leading end 1b of the new raw film to the tail end 1a of the raw film roll subjected to each of the steps in the stretching apparatus is performed.

Namely, the preceding tail end of the film is bonded to the leading end of the next raw film by a laser bonding method. This can provide bonding of the films in which the film is not broken even at a stretch ratio of not less than 5.5 times, required to give a high polarizing function. Moreover, when the bonded portion is passed, the preceding raw film and the next raw film can be continuously fed without changing the stretching conditions to improve work efficiency, productivity, and yield and obtain the effect of reducing material loss.

The bonding step can be performed as follows:

for example, water is applied to one or both of the surfaces of the tail end 1a of the preceding film and the leading end 1b of the new film. The old and new raw films are arranged to be layered on the stage 40 such that the width of the layered portion is not less than 0.1 mm and less than 10.0 mm. While pressure is applied to the layered portion by the pressurizing member 50, the layered portion is irradiated with the laser light having a wavelength in the range of 1.9 $\mu$m to 2.2 $\mu$m, for example, to melt the resins of the films in the film interface and form the welded portion 30.

By welding using the laser light in this manner, an area thermally modified can be reduced compared to the case of welding using a heat sealer. As a result, a joint portion in which distortion is difficult to concentrate during stretching can be formed.

In the related art, the laser welding uses a phthalocyanine pigment or a naphthalocyanine pigment, and is performed by irradiation with the laser light having a wavelength in the range of 800 nm to 1200 nm. Here, the laser light having a wavelength in the range of 1.9 $\mu$m to 2.2 $\mu$m is used, and water is used as the light absorbing agent instead of the pigment.

Water can be applied to the interface between two polymer films having low water absorbing properties, and the interface can be irradiated with the laser light having a wavelength of 1.9 $\mu$m to 2.2 $\mu$m. In this case, welding may be conversely inhibited due to boiling of water and the like, and the conditions need to be adjusted.

Meanwhile, when a water absorbable polymer film such as a polyvinyl alcohol resin film is used in the state where the film absorbs water, the laser welding can be easily performed while such inhibition of the welding is prevented.

Accordingly, in the present embodiment, a bonded portion with higher quality can be formed than in the case of using a heat sealer or the like while use of the expensive light absorbing agent such as phthalocyanine pigments and naphthalocyanine pigments is suppressed. Moreover, the present embodiment can provide a raw film for the polarizing film that may be less likely to contaminate the chemical solution.

In the case where the laser welding is performed as in the present embodiment, the stretch ratio is more advantageous than that in the welding using a heat sealer.

This will be specifically described. For example, suppose that a raw film having a large thermally modified (hardened) area formed in the joint portion by bonding using a heat sealer is fed to the stretching apparatus, the temperatures of the swelling bath 4a, the dyeing bath 4b, and the crosslinking bath 4c are, for example, around 30°C, and the total stretch ratio in the crosslinking bath 4c is set to approximately 5.0 times. When the film is stretched in this state, the thermally modified area is hardly stretched. As a result, regions having large distortion on the upstream and downstream sides of the thermally modified area are formed.

The joint portion is broken when the joint portion is further stretched in the stretching bath 4d.

Meanwhile, in the present embodiment, the thermally modified area is smaller than that in the case where the layered portion is welded using a heat sealer, reducing concentration of distortion.

In addition, the small thermally modified area is easy to swell in the chemical solutions contained in the respective baths.

Namely, the small thermally modified area can be softened, further preventing concentration of distortion.

For example, in the case where the temperatures of the swelling bath 4a, the dyeing bath 4b, and the crosslinking bath 4c are around 30°C, the softening effect by swelling is less expected. Meanwhile, when the temperature of the stretching bath is 50 to 62°C, the swelling of the thermally modified area can progress to stretch the thermally modified area itself.

Namely, stretching properties of a region not influenced by heat by the welding can be made closer to those of the welded portion. Thereby, the film can be stretched at a high stretch ratio while the problems such as breakage are suppressed.

The joint portion welded using a heat sealer has a large thermally modified area. For this reason, softening by swelling progresses mildly. Even when the film is stretched under the same temperature condition, the joint portion is easily broken.

Thus, in the method of producing a polarizing film according to the present embodiment, a joint portion difficult to be broken by stretching can be formed.

As described above, in the present embodiment, use of the pigment can be suppressed. Accordingly, the chemical solutions in the swelling bath and the dyeing bath may be less contaminated, and time and troublesome works needed for purifying the chemical solution can be reduced. In addition, the pigment can be prevented from adhering to a portion other than the joint portion of the film used as the polarizing film. Whereby, the yield is prevented from lowering.

Namely, in the present embodiment, without using any light absorbing agent, or using as small an amount thereof as possible even when the light absorbing agent is used, high quality bonding can be performed in the water absorbable polymer film such as the polyvinyl alcohol resin film. Moreover, efficiency in the method of producing a polarizing film can be improved.

The thickness of the polarizing film produced according to the production process illustrated in the present embodiment is not particularly limited, and is preferably 5 to 40 $\mu$m.

At a thickness of not less than 5 $\mu$m, mechanical strength is not reduced. At a thickness of not more than 40 $\mu$m, optical properties are not reduced. A thin profile of the image display apparatus can be attained when the polarizing film is used in the image display apparatus.

The polarizing film produced according to the present embodiment can be used as a polarizing film laminated on a liquid crystal cell substrate or the like in liquid crystal display apparatuses or the like. Other than the liquid crystal display apparatuses, the polarizing film can be used as a polarizing film in a variety of image display apparatuses such as electroluminescence display apparatuses, plasma displays, and field emission displays.

In practical use, a variety of optical layers can be laminated on both or one of the surfaces of the polarizing film to form an optical film, or the polarizing film can be subjected to a variety of surface treatments. Thus, the polarizing film can be used in image display apparatuses such as liquid crystal display apparatuses.

The optical layer is not particularly limited as long as required optical properties are satisfied. For example, films used for formation of an image display apparatus such as a transparent protective layer for protecting the polarizing film, an alignment liquid crystal layer for visual compensation or the like, an adhesive layer for laminating other film, a polarization conversion element, a reflector, a semi-transparent plate, a phase difference plate (including a 1/2 or 1/4 wavelength plate ($\lambda$ plate)), a visual compensation film, and a brightness improving film can be used.

Examples of surface treatments can include a hard coat treatment, an anti-reflective treatment, and surface treatments for prevention of sticking, scattering, or glare.

In the present embodiment, an example of the raw film used to produce a polarizing film has been described, but the method of bonding a water absorbable polymer film according to the present invention will not be always limited to the method of bonding the raw film.

For example, in bonding of the polyvinyl alcohol resin film to other thermoplastic resin film, the polyvinyl alcohol resin film in the water-absorbing state may be laser welded, or a polyvinyl alcohol resin film in the water-absorbing state may be contacted with the surface of a member other than the film, and laser welded. These cases are also included in the scope intended as the method of bonding a water absorbable polymer film according to the present invention.

Moreover, in the present invention, the material to be bonded to the water absorbable polymer film will not be always limited to a separate body from the water absorbable polymer film.

For example, the band-like water absorbable polymer film is rolled into a cylindrical shape, and parts of the film are layered. The layered portion in the water-absorbed state is laser welded. Alternatively, the water absorbable polymer film is folded in two, and laser welded. Such cases are also included in the scope intended by the present invention.

Further, in the present invention, the water absorbable polymer film is limited to the polyvinyl alcohol resin film.

In the present invention, the water absorbable polymer film which is polyvinyl alcohol resin film has been defined as the polymer film to be bonded, because water is easily absorbed, and the film can be efficiently laser welded by the laser light having a wavelength of 1.9 $\mu$m to 2.2 $\mu$m, for example.

EXAMPLES

Next, using Example, the present invention will be described more in detail, but the present invention will not be limited to these.

(Basic conditions)

- raw film:

    polyvinyl alcohol resin (PVA) film (made by Kuraray Co., Ltd., thickness of 75 $\mu$m, width of 30 mm)

- the width of the layered portion:

    1.5 mm
    (heat melting bonding method)

- laser:

    thulium-doped fiber laser (wavelength of 2 $\mu$m, power of 100 W, spot diameter of 2 mm$\phi$, power density of 3,180 W/cm$^2$, scan rate of 50 mm/sec, integrated amount of irradiation of 8127 J/cm$^2$, top hat beam)

- pressurizing member:

    quartz glass plate (thickness of 10 mm)

- pressurizing condition:

    pressed against the layered portion of the raw films at a load of 50 kgf/cm$^2$

(Example 1)

Of two layered and disposed PVA films, the lower PVA film had a water absorbing rate of 18%. In the portion irradiated with the laser, the maximum light absorptivity was 22% at a wavelength within the range of 1.9 to 2.2 $\mu$m. The laser bonding was performed under the basic conditions.

As a result, good bonding properties were found without using any special light absorbing agent.

The obtained bonded body had an excellent tensile break strength of 100 N/30 mm width (tensile rate of 50 mm/min, tensile tester).

The bonded body was dipped into water at 30°C for 1 minute. It was not found that foreign substances were eluted in water.

(Example 2)

Two raw films, i.e., PVA films were laser bonded under the same conditions as in Example 1. The thus-bonded PVA film was conveyed while the PVA film was stretched in the stretching apparatus shown in FIG. 1 such that the stretch ratio was 2.6 times in the swelling bath, 3.4 times in the dyeing bath, 3.6 times in the crosslinking bath, and 6.0 times in the stretching bath. Further, the PVA film was passed through the washing bath to produce a polarizing film. As a result, the polarizing film could be continuously produced without breaking at the joint portion.

(Comparative Example 1)

The PVA films were laser bonded in the same manner as in Example 1 except that a light absorbing agent (trade name "Clearweld LD120C," made by Gentex TechnologyCorporation, U.S.) was applied to the interface between the layered and disposed films at 10 nL/mm$^2$ to control the light absorptivity at the wavelength of 940 nm to be 40%, and the layered PVA films were irradiated with the laser at a power of 90 W using a semiconductor laser having a wavelength of 940 nm.

As a result, good bonding properties such as a tensile break strength of 100 N/30 mm were found. When the PVA films were dipped into water at 30°C for 1 minute and observed, it was visually found that foreign substances attributed to the light absorbing agent were eluded into water.

As above, it is found that the present invention can form a high quality bonded portion.

REFERENCE SIGNS LIST

1: raw film (water absorbable polymer film), 1 a: tail end, 1b: leading end, 4f: stretching bath, 9: roller

**Claims**

1. A method of bonding a polymer film, comprising contacting a surface of a polymer film which is a polyvinyl alcohol resin film with a surface of a material to be bonded and laser welding an interface between the surface of the polymer film and the surface of the material to be bonded,
   wherein water is absorbed at least in the interface side of the polymer film, the interface side is irradiated with laser light (R), and the laser light (R) is absorbed by the absorbed water to perform the laser welding.

2. The method of bonding a polymer film according to claim 1, wherein laser light (R) having a wavelength in the range of 1.9 μm to 2.2 μm is used as the laser light (R).

3. The method of bonding a polymer film according to claim 2, wherein the laser welding is performed under a condition in which the laser light (R) exhibits a light absorptivity (A) of not less than 20%.

4. The method of bonding a polymer film according to claim 1, wherein the polymer film has a thickness in the range of 5 μm to 100 μm.

5. A method of producing a polarizing film, comprising dipping a raw film (1) into a chemical solution to produce a polarizing film, the raw film (1) being produced by bonding two or more polyvinyl alcohol resin films, wherein the bonding of the raw film (1) is performed according to a method of bonding a polymer film according to claim 1.

**Patentansprüche**

1. Verfahren zum Verbinden eines Polymerfilms, umfassend Kontaktieren einer Oberfläche eines Polymerfilms, bei dem es sich um einen Polyvinylalkoholharzfilm mit einer Oberfläche eines zu verbindenden Materials handelt, und Laserschweißen einer Grenzfläche zwischen der Oberfläche des Polymerfilms und der Oberfläche des zu verbindenden Materials, wobei Wasser zumindest in der Schnittstellenseite des Polymerfilms absorbiert wird, die Schnittstellenseite mit Laserlicht (R) bestrahlt wird und das Laserlicht (R) vom absorbierten Wasser absorbiert wird, um das Laserschweißen durchzuführen.

2. Verfahren zum Verbinden eines Polymerfilms gemäß Anspruch 1, wobei als Laserlicht (R) Laserlicht (R) mit einer Wellenlänge im Bereich von 1,9 μm bis 2,2 μm verwendet wird.

3. Verfahren zum Verbinden eines Polymerfilms gemäß Anspruch 2, wobei das Laserschweißen unter einer Bedingung durchgeführt wird, bei der das Laserlicht (R) ein Lichtabsorptionsvermögen (A) von nicht weniger als 20% aufweist.

4. Verfahren zum Verbinden eines Polymerfilms gemäß Anspruch 1, wobei der Polymerfilm eine Dicke im Bereich von 5 μm bis 100 μm aufweist.

5. Verfahren zum Herstellen eines polarisierenden Films, umfassend Eintauchen eines Rohfilms (1) in eine chemische Lösung, um einen polarisierenden Film herzustellen, wobei der Rohfilm (1) hergestellt wird, indem zwei oder mehr Polyvinylalkoholharzfilme miteinander verbunden werden,

wobei das Verbinden des Rohfilms (1) gemäß einem Verfahren zum Verbinden eines Polymerfilms gemäß Anspruch 1 durchgeführt wird.

## Revendications

1. Procédé de lier un film polymère, comprenant la mise en contact d'une surface d'un film polymère qui est un film d'une résine d'alcool polyvinylique avec une surface d'un matériau à lier et le soudage au laser d'une interface entre la surface du film polymère et la surface du matériau à lier, dans lequel de l'eau est absorbée au moins dans le côté de l'interface du film polymère, le côté de l'interface est irradié avec une lumière de laser (R) et la lumière de laser (R) est absorbée par l'eau absorbée pour effectuer le soudage au laser.

2. Procédé de lier un film polymère selon la revendication 1, dans lequel une lumière de laser (R) ayant une longueur d'onde dans l'intervalle de 1,9 $\mu$m à 2,2 $\mu$m est utilisée comme lumière de laser (R).

3. Procédé de lier un film de polymère selon la revendication 2, dans lequel le soudage au laser est effectué sous une condition dans laquelle la lumière de laser (R) présente une absorption de lumière (A) d'au moins 20%.

4. Procédé de lier un polymère selon la revendication 1, dans lequel le film polymère a une épaisseur dans l'intervalle de 5 $\mu$m à 100 $\mu$m.

5. Procédé de produire un film polarisant, comprenant immerger un film brut (1) en une solution chimique pour produire un film polarisant, le film brut (1) étant produit en liant deux ou plusieurs films de résines d'alcool polyvinylique,

dans lequel la liaison du film brut (1) est effectuée selon un procédé de lier un film polymère selon la revendication 1.

# FIG. 1

EP 2 586 594 B1

FIG. 2

# FIG. 3

**EP 2 586 594 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007171897 A
- JP 2010008509 A
- JP 2009066820 A
- JP 2004284122 A